(19) Europäisches Patentamt / European Patent Office / Office européen des brevets

(11) EP 1 835 777 B1

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
***H04W 16/02*** *(2009.01)*

(21) Anmeldenummer: **06005569.6**

(22) Anmeldetag: **17.03.2006**

(54) **Ressourcenallokation in einem Mehrträgerfunkkommunikationssystem**

Allocation of resources in a multicarrier radio communications system

Allocation de ressources dans un système de radiocommunication multiporteuse

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**19.09.2007 Patentblatt 2007/38**

(73) Patentinhaber: **Nokia Siemens Networks GmbH & Co. KG**
**81541 München (DE)**

(72) Erfinder:
- **Halfmann, Rüdiger**
  **67697 Otterberg (DE)**
- **Hindelang, Thomas**
  **82256 Fürstenfeldbruck (DE)**
- **Raaf, Bernhard**
  **82061 Neuried (DE)**
- **Zirwas, Wolfgang**
  **82194 Gröbenzell (DE)**

(56) Entgegenhaltungen:
**WO-A-20/05055544**
**WO-A-20/05096538**
**US-A1- 2005 135 324**
**US-B1- 6 473 467**

- **DAMJI N ET AL: "Dynamic downlink ofdm resource allocation with interference mitigation and macro diversity for multimedia services in wireless cellular systems" WIRELESS COMMUNICATIONS AND NETWORKING CONFERENCE, 2005 IEEE NEW ORLEANS, LA, USA 13-17 MARCH 2005, PISCATAWAY, NJ, USA, IEEE, 13. März 2005 (2005-03-13), Seite DynamicdownlinkOFDMresourceallocationwithint, XP010791366 ISBN: 0-7803-8966-2**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 835 777 B1

Printed by Jouve, 75001 PARIS (FR)

## Beschreibung

Die Erfindung betrifft ein Verfahren zur Zuweisung von Funk- ' ressourcen an Funkstationen, bei welchem ein Frequenzband umfassend eine Vielzahl von Subbändern eingesetzt wird.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen oder netzseitige Funkstationen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Um eine möglichst effiziente Übertragung von Daten zu erreichen, zerlegt man das gesamte zur Verfügung stehende Frequenzband in mehrere Subbänder (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat unter anderem den Vorteil, dass die am Empfänger erforderliche Komplexität reduziert werden kann. Ferner ermöglicht die Aufteilung der verfügbaren Bandbreite in mehrere schmalbandige Subbänder eine deutlich höhere Granularität der Datenübertragung hinsichtlich der Verteilung der zu übertragenden Daten auf die unterschiedlichen Subbänder, d.h. die Funkressourcen können mit einer großen Feinheit auf die zu übertragenden Daten bzw. auf die Funkstationen verteilt werden. Insbesondere bei Übertragungen mit variabler Datenrate oder bei burstartigem Datenverkehr kann die verfügbare Bandbreite durch die Zuweisung einer Anzahl von Subbändern an unterschiedliche Funkstationen effizient ausgenutzt werden.

Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen. Somit sind die Subbänder orthogonal zueinander. Durch den meist sehr geringen Abstand der Subbänder und der Schmalbandigkeit der auf den einzelnen Subbändern übertragenen OFDM-Signale soll gewährleistet werden, dass die Übertragung innerhalb der einzelnen Subbänder im Allgemeinen nicht frequenzselektiv ist. Dies vereinfacht am Empfänger die Signalentzerrung. Für UMTS wird derzeit eine Erweiterung, genannt LTE (Long Term Evolution), entwickelt, welche voraussichtlich OFDM verwenden wird.

Die WO 20051096538 A1 beschreibt ein Verfahren zur Zuweisung von Funkressourcen, bei dem das Frequenzband eine Vielzahl von benachbarten Frequenzsegmenten umfaßt, die jeweils in eine Vielzahl von Frequenz-Clustern unterteilt sind. Eine erste Gruppe von Clustern wird starr einer ersten Gruppe von Benutzern zugeteilt, und eine zweite Gruppe von Benutzern kann dynamisch innerhalb einer zweiten Gruppe von Clustern springen. Die Zuteilung von Benutzern zu den Gruppen wird in Abhängigkeit von deren Bewegungsgeschwindigkeit vorgenommen.

Der Erfindung liegt die Aufgabe zugrunde, für ein Funkkommunikationssystem, welches ein Frequenzband umfassend eine Vielzahl von Subbändern verwendet, ein effizientes Verfahren zur Zuweisung von Funkressourcen an Funkstationen aufzuzeigen. Weiterhin soll eine netzseitige Einrichtung zur Durchführung des Verfahrens vorgestellt werden.

Diese Aufgabe wird durch ein Verfahren mit den Merkmalen des Anspruchs 1 und durch eine Vorrichtung mit Merkmalen des nebengeordneten Anspruchs 18 gelöst. Vorteilhafte Ausgestaltungen und Weiterbildungen sind Gegenstand von Unteransprüchen.

Bei dem erfindungsgemäßen Verfahren zur Zuweisung von Funkressourcen an Funkstationen wird ein Frequenzband umfassend eine Vielzahl von Subbändern eingesetzt. Die Zuweisung erfolgt so, dass mehrere Blöcke existieren, und zwar mehrere erste Blöcke und mehrere zweite Blöcke. Jeder Block besteht jeweils aus einer Mehrzahl von benachbarten Subbändern. Im Frequenzbereich folgt abwechselnd jeweils ein erster Block und ein zweiter Block. Die Subbänder der ersten Blöcke sind statisch zugewiesen, während die Subbänder der zweiten Blöcke gemäß einem Frequenzsprungverfahren zugewiesen sind. Die Lage der Blöcke innerhalb des Frequenzspektrums ändert sich mit der Zeit.

Es wird die Zuweisung von Funkressourcen an Funkstationen betrachtet. Sind einer Funkstation Funkressourcen zugewiesen, so ist diese Funkstation berechtigt, auf den ihr zugewiesenen Funkressourcen zu kommunizieren, d.h. Nachrichten zu versenden und/oder zu empfangen.

Die Zuweisung der Funkressourcen betrifft ein Frequenzband. Subbänder des Frequenzbandes werden in Blöcke zusammengefasst, wobei zumindest zwei erste Blöcke und zwei zweite Blöcke vorliegen. Jeder Block besteht aus zumindest zwei Subbändern. Die Blöcke können verschieden groß sein. Somit ist es möglich, dass erste Blöcke mit voneinander unterschiedlicher Subband-Anzahl vorhanden sind, und dass zweite Blöcke mit voneinander verschiedener Subband-Anzahl vorhanden sind. Vorteilhaft ist es, wenn die ersten Blöcke alle gleich groß sind, d.h. wenn die ersten Blöcke jeweils aus einer ersten Mehrzahl von Subbändern bestehen. Weiterhin ist es vorteilhaft, wenn auch die zweiten Blöcke alle gleich groß sind, d.h. wenn die zweiten Blöcke jeweils aus einer zweiten Mehrzahl von Subbändern bestehen. Hierbei kann die erste Mehrzahl gleich oder ungleich der zweiten Mehrzahl sein. Ungleichheit bedeutet, dass entweder jeder erste Block größer ist als jeder zweite Block, oder, dass jeder zweite Block größer ist als jeder erste Block.

Die Blöcke der beiden unterschiedlichen Typen wechseln sich ab, d.h. zuerst steht ein erster Block, darauf folgt ein zweiter Block, darauf folgt wieder ein erster Block, usw. Dieses Aufeinanderfolgen der beiden Blocktypen erstreckt sich vorzugsweise über das gesamte Frequenzband, d.h. alle Subbänder des Frequenzbandes gehören entweder einem ersten oder einem zweiten Block an. Es ist jedoch abweichend hiervon möglich, dass das Aufeinanderfolgen der beiden Blocktypen sich lediglich über einen Teil des Frequenzbandes erstreckt, so dass Subbänder existieren, welche weder einem ersten noch einem zweiten Block angehören. Solche Subbänder können gegebenenfalls anderweitig verwendet werden. Die Blöcke folgen vorzugsweise direkt aufeinander, d.h. zwischen zwei Blöcken existiert vorzugsweise kein Subband, welches keinem der beiden Blöcke angehört. Das direkte Aufeinanderfolgen der Blöcke kann sich sowohl auf alle Blöcke als auch auf lediglich einen Teil der Blöcke beziehen.

Für die ersten Blöcke wird eine statische Ressourcenallokation eingesetzt, für die zweiten Blöcke hingegen eine dynamische Ressourcenallokation in Form eines Frequenzsprungverfahrens. Hierbei bedeutet die statische Zuweisung, dass die Zuweisung für eine bestimmte Zeitspanne gleich bleibt, sich somit während dieser bestimmten Zeitspanne nicht mit der Zeit ändert. Bei dieser bestimmen Zeitspanne handelt es sich um eine Mehrzahl der kleinsten Zeiteinheiten, für welche eine Zuweisung von Funkressourcen möglich ist; bei OFDM z.B. werden diese kleinsten Zeiteinheiten als Symbole bezeichnet. In Bezug auf die ersten Blöcke ist die Zuweisung somit für jede der Zeiteinheiten der bestimmen Zeitspanne identisch zur Zuweisung für alle anderen Zeiteinheiten der gleichen bestimmen Zeitspanne.

Die Verwendung eines Frequenzsprungverfahrens bedeutet, dass sich in Bezug auf eine bestimmte Funkstation das oder die ihr zugewiesenen Subbänder des jeweiligen Blocks mit der Zeit ändern. Hierbei muss der jeweiligen Funkstation nicht in jeder Zeiteinheit der Zeitspanne ein Subband des jeweiligen Blockes zugewiesen sein, es muss jedoch zumindest einmal während der Zeitspanne ein Wechsel von einem Subband des Blocks zu einem anderen Subband des Blocks erfolgen. Vorzugsweise ist der jeweiligen Funkstation in jeder Zeiteinheit der Zeitspanne zumindest ein Subband des jeweiligen Blockes zugewiesen. Es ist auch möglich, dass der Funkstation ein bestimmtes Subband des Blocks für aufeinanderfolgende Zeiteinheiten der Zeitspanne zugewiesen ist.

In Ausgestaltung der Erfindung sind zumindest einer Funkstation Funkressourcen aus einer Mehrzahl von zweiten Blöcken oder aus jedem der zweiten Blöcke zugewiesen. Dieses Vorgehen eignet sich besonders für IFDMA (Interleaved Frequency Division Multiple Access). So ist es insbesondere möglich, dass jeder Funkstation, welcher Funkressourcen aus einem der zweiten Blöcke zugewiesen sind, Funkressourcen aus jedem der zweiten Blöcke zugewiesen sind. IFDMA wird beschrieben z.B. in

- A Filippi, E. Costa, E. Schulz: "Low Complexity Interleaved Sub-carrier Allocation in OFDM Multiple Access Systems", Proc. IEEE VTC'04, Los Angeles, California, USA, September 2004,
- T. Frank, A. Klein, E. Costa, E. Schulz: "Interleaved Orthogonal Frequency Division Multiple Access with Variable Data Rates", OFDM Workshop, Hamburg, 31.8.-1.9. 2005.

Vorzugsweise sind die Subbänder der ersten Blöcke zu jedem Zeitpunkt ausschließlich einer Funkstation zugewiesen. Es existieren demnach nicht mehrere Funkstationen, welchen gleichzeitig Subbänder des gleichen ersten Blocks zugewiesen sind. Möglich ist, dass jeder erste Block einer unterschiedlichen Funkstation zugewiesen ist. Alternativ hierzu kann einer Funkstation gleichzeitig eine Mehrzahl von ersten Blöcken zugewiesen sein.

In Weiterbildung der Erfindung sind in Bezug auf mindestens einen zweiten Block verschiedene Subbänder gleichzeitig verschiedenen Funkstationen zugewiesen. Z.B. kann zu einem bestimmten Zeitpunkt das erste Subband eines zweiten Blocks einer ersten Funkstation zugewiesen sein, das zweite Subband dieses Blockes einer zweiten Funkstation, das dritte Subband dieses Blockes einer dritten Funkstation, usw. Hierbei ist es auch möglich, dass einer Funkstation gleichzeitig mehrere Subbänder dieses Blockes zugewiesen sind. Es wird somit für mehrere Funkstationen ein Frequenzsprungverfahren innerhalb des jeweiligen zweiten Blockes durchgeführt. Vorzugsweise gelten diese Ausführungen für alle zweiten Blöcke.

Vorzugsweise wird für jeden zweiten Block das gleiche Frequenzsprungverfahren verwendet. D.h. das Sprungmuster ist für alle zweiten Blöcke gleich. Alternativ hierzu kann für mindestens zwei zweite Blöcke ein voneinander unterschiedliches Frequenzsprungverfahren verwendet werden. Letzteres bietet sich insbesondere dann an, wenn die Größe der zweiten Blöcke nicht einheitlich ist.

In Weiterbildung der Erfindung sind die aufgrund des Frequenzsprungverfahrens für mindestens einen zweiten Block zugewiesenen Funkressourcen weniger als die vorhandenen Funkressourcen dieses Bockes. Somit existieren freie Funkressourcen dieses zweiten Blockes, welche nicht an Funkstationen zugewiesen sind. Alternativ hierzu ist es möglich, dass die aufgrund des Frequenzsprungverfahrens für mindestens einen zweiten Block zugewiesenen Funkressourcen gleich den vorhandenen Funkressourcen dieses Bockes sind. Letzteres entspricht einer vollständigen Zuweisung der Funkressourcen des betrachteten Blockes an Funkstationen. Vorzugsweise gelten diese Ausführungen für alle zweiten Blöcke.

Einer bevorzugten Ausführungsform gemäß sind aufgrund des Frequenzsprungverfahrens zumindest einer Funkstation, welcher Funkressourcen eines zweiten Blocks zugewiesen sind, zu jedem Zeitpunkt maximal beabstandete Subbänder zugewiesen. Dies kann gemäß einem IFDMA Verfahren realisiert werden. Vorzugsweise gilt diese Art der Zuweisung für alle Funkstationen, welchen Funkressourcen eines zweiten Blockes zugewiesen sind.

In Ausgestaltung der Erfindung ist aufgrund des Frequenzsprungverfahrens für mindestens einen zweiten Block jedes Subband dieses zweiten Blockes einer oder mehreren Funkstationen periodisch zugewiesen. Vorzugsweise gilt dies für alle zweiten Blöcke.

Da sich die Lage der Blöcke innerhalb des Frequenzbandes mit der Zeit ändert, ist von Vorteil hierbei eine regelmäßige Änderung, z.B. eine Änderung in gleichmäßigen Zeitabständen.

Mit Vorzug sendet eine netzseitige Funkstation an Funkstationen Informationen über die Zuweisung. Durch diese Versendung werden die Funkstationen über ihre Berechtigung zur Verwendung der ihnen zugewiesenen Funkressourcen benachrichtigt und können mit diesem Wissen die zugewiesenen Funkressourcen verwenden. Wie bereits erwähnt, kann sich dies auf Ressourcen für die Aufwärts- und/oder für die Abwärtsrichtung beziehen.

Die erfindungsgemäße netzseitige Einrichtung eignet sich insbesondere zur Durchführung des erfindungsgemäßen Verfahrens, wobei dies auch auf die Ausgestaltungen und Weiterbildungen zutreffen kann. Hierzu kann sie weitere geeignete Mittel umfassen. Insbesondere können auch Mittel zum Erstellen einer an Funkstationen zu versendenden Nachricht mit Informationen über die Zuweisung vorgesehen sein. Die erfindungsgemäße netzseitige Einrichtung kann durch mehrere miteinander verbundene Einrichtungen realisiert werden.

Im folgenden wird die Erfindung anhand eines Ausführungsbeispiels näher erläutert. Dabei zeigen:

Figur 1: einen Ausschnitt aus einem Funkkommunikationssystem,

Figur 2: eine erste Aufteilung von Funkressourcen,

Figur 3: eine zweite Aufteilung von Funkressourcen.

Figur 1 zeigt die Funkzelle einer netzseitigen Funkstation BS, schematisch als Sechseck dargestellt. In der Funkzelle befinden sich die Teilnehmerstationen 1, 2, 3, 4, 5 und 6, welche per Funk mit der netzseitigen Funkstation BS kommunizieren können. Bei dem betrachteten Funkkommunikationssystem kann es sich z.B. um ein System nach einem 3GPP Standard wie LTE handeln.

Zur Kommunikation zwischen der netzseitigen Funkstation BS und den Teilnehmerstationen 1, 2, 3, 4, 5 und 6 wird ein in den Figuren 2 und 3 dargestelltes Frequenzband FB verwendet, welches in eine Vielzahl von Subbändern aufgeteilt ist. Diese Subbänder können für die Übertragungstechnik OFDM oder auch für ein anderes Mehrträgerübertragungsverfahren eingesetzt werden. Die Subbänder entsprechen den Zeilen in den Figuren 2 und 3, somit ist die Frequenz nach oben aufgetragen. Die Spalten in den Figuren 2 und 3 stellen die kleinste Zeiteinheit dar, für welche ein Subband einer Teilnehmerstation zugewiesen werden kann, somit ist die Zeit nach rechts aufgetragen. In Anlehnung an die Terminologie bei OFDM werden diese kleinsten Zeiteinheiten im folgenden als Symbole bezeichnet.

Im folgenden wird die Zuweisung von Funkressourcen an die Teilnehmerstationen 1, 2, 3, 4, 5 und 6 erläutert. Diese Zuweisung kann durch die netzseitige Funkstation BS oder auch durch eine nicht in Figur 1 dargestellte Einrichtung erfolgen, wie z.B. durch eine Einrichtung zur Kontrolle der netzseitigen Funkstation BS.

Die Figuren 2 und 3 zeigen zwei verschiedene Beispiele der erfindungsgemäßen Zuweisung von Funkressourcen an die Teilnehmerstationen 1, 2, 3, 4, 5 und 6. Eine Funkressourceneinheit, d.h. ein Kästchen als Kombination eines Subbandes und eines Symbols, ist gemäß der in den Figuren 2 und 3 gewählten Darstellungsweise derjenigen Teilnehmerstation zugewiesen, deren Bezugszeichen das jeweilige Kästchen enthält, oder deren Bezugszeichen für die das Kästchen enthaltende Zeile angegeben ist. Die im folgenden erläuterte Zuweisung kann sich auf die Aufwärtsrichtung, d.h. die Nachrichtenversendung von einer Teilnehmerstation 1, 2, 3, 4, 5 und 6 zu der netzseitigen Funkstation BS, und/oder auf die Abwärtsrichtung, d.h. die Nachrichtenversendung von der netzseitigen Funkstation BS zu einer Teilnehmerstation 1, 2, 3, 4, 5 und 6, beziehen.

Im folgenden wird die Zuweisung gemäß Figur 2 erläutert. Es existieren drei Blöcke von Funkressourcen, wobei ein erster der Blöcke der Teilnehmerstation 1, ein zweiter der Teilnehmerstation 2, und ein dritter der Teilnehmerstation 3 zugewiesen ist. Jeder dieser Blöcke besteht aus der gleichen Mehrzahl benachbarter Subbänder, nämlich in Figur 2 aus sechs Subbändern. Die Abstände zwischen diesen Blöcken sind gleich groß, nämlich in Figur 2 vier Subbänder groß. Die Subbänder eines Blockes werden den Teilnehmerstationen jeweils für eine bestimmte Mehrzahl von aufeinander folgenden Symbolen zugewiesen, nämlich in Figur 2 für 7 Symbole. Nach den in Figur 2 dargestellten 7 Symbolen können die Blöcke anderen Teilnehmerstationen zugewiesen werden oder auch den Teilnehmerstationen 1, 2 und 3 zugewiesen bleiben, wobei diese neue Zuweisung wieder für 7 Symbole bestehen bleibt. Jeder Block wird ausschließlich einer einzelnen Teilnehmerstation zugewiesen. Diese Blöcke werden im folgenden als lokalisierte Funkressourcen bezeichnet.

In Abgrenzung zu den erläuterten lokalisierten Funkressourcen werden die Funkressourcen zwischen den Blöcken als verteilte Funkressourcen bezeichnet. Auch die verteilten Funkressourcen bilden Blöcke. Die Frequenzbreite der Blöcke der verteilten Funkressourcen ist jeweils gleich, nämlich in Figur 2 vier Subbänder breit. Im Gegensatz zur Verwendung der lokalisierten Funkressourcen ist bei den verteilten Funkressourcen ein Subband einer Teilnehmerstation nur für die Dauer von einzelnen Symbolen zugewiesen, d.h. nicht für die gesamte in Figur 2 dargestellte Zeitspanne von 7 Symbolen. In Bezug auf die verteilten Funkressourcen zwischen dem Block der Teilnehmerstation 1 und dem Block der Teilnehmerstation 2 z.B. ist das erste Subband der Teilnehmerstation 4 für das erste Symbol, das vierte Symbol und das siebte Symbol zugewiesen. Im allgemeinen gilt, dass bei den verteilten Funkressourcen für jede Teilnehmerstation ein Frequenzsprungverfahren angewendet wird. So ist der Teilnehmerstation 4 beispielsweise für den betrachteten Block zwischen dem Block der Teilnehmerstation 1 und dem Block der Teilnehmerstation 2 gemäß dem Frequenzsprungverfahren während dem ersten Symbol das 1. und das 4. Subband zugewiesen, während dem zweiten Symbol das 2. Subband, während dem dritten Symbol das 3. Subband, während dem vierten Symbol das 1. und das 4. Subband, während dem fünften Symbol das 2. Subband, während dem sechsten Symbol das 3. Subband, und während dem siebten Symbol das 1. und das 4. Subband.

Den Teilnehmerstationen 4, 5 und 6, welchen verteilte Funkressourcen zugewiesen sind, sind jeweils Funkressourcen aus jedem Block von verteilten Funkressourcen zugewiesen. Das Sprungmuster ist in Figur 2 für die drei Blöcke von verteilten Funkressourcen jeweils das gleiche. Alternativ ist es möglich, dass für verschiedene Blöcke von verteilten Funkressourcen verschiedene Sprungmuster eingesetzt werden.

Die Blöcke mit den verteilten Funkressourcen werden somit einer Mehrzahl von Teilnehmerstationen zugewiesen, welche sich die Funkressourcen dieser Blöcke teilen. Im Gegensatz zur für eine bestimmte Anzahl von Symbolen statischen Zuweisung der Blöcke mit den lokalisierten Funkressourcen beinhaltet die Zuweisung der Blöcke mit den verteilten Funkressourcen eine zeitliche Dynamik. Wenn jeder Teilnehmerstation, welcher verteilte Funkressourcen zugewiesen sind, jeweils Funkressourcen aus jedem Block der verteilten Funkressourcen zugewiesen sind, werden die Funkressourcen eines jeden Blocks mit verteilten Funkressourcen unter den gleichen Teilnehmerstationen aufgeteilt.

Zählt man die jeder der Teilnehmerstationen 4, 5 und 6 zugewiesenen Funkressourcen der Figur 2 zusammen, so ergibt sich, dass den Teilnehmerstationen 4, 5 und 6 jeweils insgesamt 4 Subbänder für die Zeitdauer von 7 Symbolen, d.h. für die Zeitdauer der statischen Zuweisung eines Blockes mit lokalisierten Funkressourcen, zugewiesen sind. Diese Zuweisung erfolgt jedoch nicht in Form von benachbarten Subbändern und benachbarten Symbolen wie bei den Teilnehmerstationen 1, 2 und 3.

In Figur 2 wird für das Frequenzsprungverfahren ein Muster angewandt, bei welchem jeder Teilnehmerstation jeweils maximal beabstandete Subbänder zugewiesen sind. Dies gilt sowohl für die Abstände der Subbänder innerhalb der einzelnen Blöcke als auch für die Abstände zwischen Subbändern verschiedener Blöcke. Diese kann durch den Einsatz von IFDMA realisiert werden. Da die Blöcke der verteilten Funkressourcen jeweils aus 4 Subbändern bestehen und die verteilten Funkressourcen unter den drei Teilnehmerstationen 4, 5 und 6 aufgeteilt werden, sind die Subbänder, welche einer bestimmten Teilnehmerstation für ein bestimmtes Symbol zugewiesen sind, innerhalb eines jeden Blocks jeweils um 2 Subbänder voneinander beabstandet.

In Figur 2 unterscheidet sich die Subbandanzahl der Blöcke mit verteilten Funkressourcen von derjenigen der Blöcke mit lokalisierten Funkressourcen. Figur 3 stellt den Fall dar, dass alle Blöcke, d.h. sowohl die Blöcke der verteilten als auch der lokalisierten Funkressourcen die gleiche Frequenzbreite aufweisen. Hierdurch stehen mehr Funkressourcen in Form von verteilten Funkressourcen zur Verfügung als in Figur 2. Es wäre möglich, diese verteilten Funkressourcen entsprechend dem Vorgehen von Figur 2 vollständig unter die Teilnehmerstationen 4, 5 und 6 aufzuteilen. Figur 3 zeigt ein andersartiges Vorgehen: jeder Teilnehmerstation 4, 5 und 6 wird der gleiche Umfang von Funkressourcen zugewiesen wie auch in Figur 2. Hierdurch existieren innerhalb der Blöcke der verteilten Funkressourcen einzelne Funkressourcen, d.h. einzelne Kästchen, welche keiner Teilnehmerstation zugewiesen sind. Die Funkressourcen der Blöcke von verteilten Funkressourcen werden gemäß Figur 3 somit nicht vollständig an Teilnehmerstationen zugewiesen, es existieren nicht an eine Teilnehmerstation zugewiesene Funkressourcen. Das Vorhandensein von nicht an eine Teilnehmerstation zugewiesenen Funkressourcen ermöglicht es, dass die Lage der Blöcke innerhalb des Frequenzbandes FB unabhängig davon, wie viele verteilte Funkressourcen benötigt werden, festgelegt werden kann.

Offensichtlich ist das Sprungmuster der verteilten Funkressourcen der Figur 3 weniger symmetrisch als dasjenige der Figur 2. Im allgemeinen können an sich beliebige Sprungmuster verwendet werden. Von besonderem Vorteil ist wie bereits erwähnt die Anwendung von IFDMA.

Sind einer Teilnehmerstation ausschließlich lokalisierte Funkressourcen eines Blocks zugewiesen, so sind alle dieser Teilnehmerstation zugewiesenen Subbänder zueinander benachbart. Außerdem werden diese Funkressourcen der Teilnehmerstation für eine Mehrzahl von aufeinanderfolgenden Symbolen zugewiesen. Bei dieser Mehrzahl handelt es sich um ein ganzzahliges Vielfaches einer Mindestanzahl von Symbolen. Sind einer Teilnehmerstation ausschließlich verteilte Funkressourcen zugewiesen, so sind die dieser Teilnehmerstation zugewiesenen Subbänder im wesentlichen über das gesamte Frequenzband FB verteilt. Denn es erfolgt mit Vorzug eine Zuweisung von Funkressourcen aus jedem Block mit verteilten Funkressourcen, wobei innerhalb eines jeden Blocks ein Frequenzsprungverfahren angewendet wird. Durch die Verwendung von verteilten Funkressourcen steigt somit die Frequenzdiversität. Letzteres ist insbesondere dann vorteilhaft, wenn dem Sender keine oder nur wenige Informationen über den Funkkanal vorliegen. Weiterhin eignet sich der Einsatz von verteilten Funkressourcen besonders für Kommunikationen, welche lediglich einen geringen Umfang an Funkressourcen benötigen, so dass die Zuweisung eines Blocks mit lokalisierten Funkressourcen eine Verschwendung darstellen würde. Ein Beispiel hierfür ist die Übertragung von bestimmten Signalisierungsinformationen.

Wie erläutert wechseln sich die Blöcke von verteilten Funkressourcen mit den Blöcken von lokalisierten Funkressourcen ab. Hierbei bleibt in den Figuren 2 und 3 die Frequenzlage aller Blöcke mit der Zeit gleich. Alternativ hierzu ist es möglich, dass sich diese Frequenzlage mit der Zeit ändert. Beispielsweise können die Blöcke der Figuren 2 und 3 mit jedem Symbol um ein Subband nach unten rutschen.

Während bei den Beispielen der Figuren 2 und 3 den Teilnehmerstationen 1, 2 und 3 jeweils nur ein Block von lokalisierten Funkressourcen zugewiesen ist, ist es auch möglich, dass einer Teilnehmerstation mehrere Blöcke lokalisierter Funkressourcen zugewiesen werden. Diese mehreren Blöcke sind jedoch dennoch zumindest durch einen Block von verteilten Funkressourcen im Frequenzraum voneinander getrennt.

Gleichbedeutend mit der Zuweisung von Funkressourcen für die Kommunikation einer einzelnen Teilnehmerstation kann die Zuweisung für eine Nachrichtenversendung an mehrere Teilnehmerstationen sein. So kann z.B. anstelle der Zuweisung des Blocks von lokalisierten Funkressourcen an die Teilnehmerstation 1 dieser Block an eine Gruppe von Teilnehmerstationen zugewiesen werden, z.B. für eine Broadcast-Versendung oder für einen bestimmten Service oder Transportkanal. Entsprechendes gilt auch für die verteilten Funkressourcen.

Bei den Zahlenwerten der Figuren 2 und 3 handelt es sich um bevorzugte Ausführungsformen. Selbstverständlich kann die Erfindung auch unter Verwendung anderer Zahlenwerte realisiert werden.

Gemäß den Konstellationen der Figuren 2 und 3 sind alle Blöcke mit den lokalisierten Funkressourcen gleich groß, und alle Blöcke mit den verteilten Funkressourcen sind gleich groß. Weiterhin erfolgt die Anordnung der beiden Blocktypen derart, dass grundsätzlich auf einen Block mit lokalisierten Funkressourcen ein Block mit verteilten Funkressourcen folgt. Von diesen beiden Erfordernissen kann jedoch auch abgewichen werden, wie im folgenden beispielhaft näher erläutert wird.

Die einheitliche Frequenzbreite der Blöcke der verteilten Funkressourcen untereinander und der Blöcke der lokalisierten Funkressourcen untereinander muss nicht gegeben sein, d.h. die Blöcke können auch unterschiedliche Anzahlen von Subbändern aufweisen. Insbesondere können die Breiten um ein Subband differieren. Das ist insbesondere dann der Fall, wenn der für die Blöcke mit den verteilten Funkressourcen zur Verfügung stehende Frequenzumfang / die zur Verfügung stehenden Subbänder auf die Anzahl der Blöcke mit den verteilten Funkressourcen aufgeteilt werden und diese Anzahl an Subbändern nicht durch die Anzahl dieser Blöcke teilbar ist. Dann können nicht allen Blöcken mit verteilten Funkressourcen die gleiche Anzahl von Subbändern zugeteilt werden. Es ist jedoch möglich, eine ähnliche Anzahl oder eine um eins abweichende Anzahl zuzuteilen.

Es kann günstig sein, mehrere benachbarte Blöcke mit lokalisierten Funkressourcen einer einzelnen Teilnehmerstation zuzuordnen und diese Blöcke unmittelbar aufeinander folgen zu lassen. Dies kann beispielsweise dann vorteilhaft sein, wenn in diesem Frequenzbereich für diese Teilnehmerstation besonders vorteilhafte Übertragungsbedingungen bestehen. Es ist dann nachteilig, wenn diese Blöcke mit lokalisierten Funkressourcen durch das Dazwischen-Schieben von Blöcken mit verteilten Funkressourcen aus dem günstigen Frequenzbereich herausgedrängt werden.

Es gibt auch Übertragungsverfahren, welche aus anderen Gründen bessere Eigenschaften zeigen, wenn Blöcke mit lokalisierten Funkressourcen unmittelbar benachbart sind, beispielsweise DFT-Spread OFDM oder SC-FDMA (single carriere FDMA), im Falle von benachbarten Blöcken zeigen diese eine geringere Überhöhung des Sendesignals im Zeitbereich (auch PAPR, "Peak to Average Power Ratio" genannt) auf. In diesem Fall können die Blöcke mit den verteilten Funkressourcen nur in den verbleibenden Zwischenräumen, typischerweise in den Zwischenräumen zwischen den Bereichen, die unterschiedlichen Teilnehmerstationen zugeordnet sind, platziert werden.

Hierbei kann es zur Maximierung der Diversität der Blöcke mit den verteilten Funkressourcen vorteilhaft sein, diese Blöcke nicht gleichmäßig zu verteilen und/oder nicht alle gleich groß zu wählen. Dies wird durch das folgende Beispiel klar: Nehmen wir an, dass drei Teilnehmerstationen je fünf benachbarte Blöcke mit lokalisierten Funkressourcen zugewiesen werden und einer weiteren Teilnehmerstation ein Block mit lokalisierten Funkressourcen. Werden Blöcke mit lokalisierten Funkressourcen und Blöcke mit verteilten Funkressourcen abwechselnd angeordnet, so beträgt der Abstand zwischen den Blöcken mit verteilten Funkressourcen entweder der Breite von fünf oder einem Block/Blöcken mit lokalisierten Funkressourcen. Je nach Kohärenzbandbreite des Kanals kann es sein, dass der Abstand von einem Block nicht ausreicht, um einen deutlichen Diversitätsgewinn zu erreichen, während fünf (oder mehr) ausreichend sind. In diesem Fall ist es nicht vorteilhaft, zwei Blöcke mit verteilten Funkressourcen unmittelbar neben dem einzelnen Block mit lokalisierten Funkressourcen anzuordnen, statt dessen ist es besser, nur einen Block mit verteilten Funkressourcen anzuordnen. Der Abstand zwischen Blöcken mit verteilten Funkressourcen ist dann entweder fünf oder sechs und somit viel ausgeglichener. Alternativ können auch die dem einzelnen Block mit lokalisierten Funkressourcen benachbarten Blöcke mit verteilten Funkressourcen kleiner (beispielsweise halb so groß) gewählt werden, als die anderen Blöcke mit verteilten Funkressourcen.

Dieses Beispiel lässt sich wie folgt verallgemeinern: die Größe eines Blocks mit verteilten Funkressourcen wird in Abhängigkeit der Abstände zu den anderen Blöcken mit verteilten Funkressourcen gewählt, insbesondere den benachbarten Blöcken mit verteilten Funkressourcen. Je größer der Abstand, desto größer auch der Block mit verteilten Funkressourcen. Allerdings wird dieser Zusammenhang bevorzugt nicht linear sein, da nach Überschreiten der Kohärenzbandbreite eine weitere Erhöhung des Abstandes keinen wesentlichen Effekt hat. Beispielsweise kann die Größe eines Blocks mit verteilten Funkressourcen folgendermaßen definiert werden:

$$\text{Größe} = \text{Scal} * f(\text{Abstand_links}, \text{Abstand_rechts})$$

Wobei gilt:

Größe :Größe des Blocks mit verteilten Funkressourcen.

Scal: Skalierungsfaktor, dieser kann z.B. abhängig von der Summe der Größen der Blöcke mit verteilten Funkressourcen gewählt werden.

Abstand_links / Abstand_rechts: Abstand zum vorigen /nächsten benachbarten Block mit verteilten Funkressourcen. Für den ersten/ letzten Block kann ein vordefinierter Wert für den nicht existenten Nachbarn verwendet werden, beispielsweise der Wert unendlich.

f(): Funktion, welche im wesentlichen angibt, wie stark die Diversität durch Verwendung des Blocks zunimmt, d.h. ein Maß, das umso größer ist, je unkorrelierter der Kanal von den beiden benachbarten Blöcken mit verteilten Funkressourcen ist. Die Funktion f kann insbesondere mit der Kohärenzbandbreite des Kanals parametriert werden.

Durch die Verwendung einer solchen Definition ist es nicht nötig, die genauen Größen der Blöcke mit verteilten Funkressourcen explizit zu signalisieren, sie lassen sich vielmehr nach Kenntnis der Blöcke mit lokalisierten Funkressourcen berechnen. Allenfalls Parameter der Funktion f müssen signalisiert werden, dies kann aber auch relativ selten erfolgen, beansprucht also keine signifikante Übertragungsbandbreite. Dieses Vorgehen minimiert somit die zur Mitteilung der Subbänderzuordnung zu übertragende Informationsmenge, also den Signalisierung-Overhead und stellt somit einen größeren Anteil der Übertragungskapazität für die Übertragung von Nutzdaten zur Verfügung.

Vorteilhafterweise wird an den extremen Frequenzlagen ein Block mit verteilten Funkressourcen platziert, d.h. der erste und/oder letzte Block in der Abfolge ist ein Block mit verteilten Funkressourcen. Dadurch wird der Frequenzbereich, über den das Fequenzsprungverfahren angewandt wird, maximiert und somit die Diversität maximiert.

## Patentansprüche

1. Verfahren zur Zuweisung von Funkressourcen an Funkstationen (1, 2, 3, 4, 5, 6), bei welchem ein Frequenzband (FB) umfassend eine Vielzahl von Subbändern eingesetzt wird, die Zuweisung derart erfolgt, dass mehrere erste Blöcke, welche jeweils aus einer Mehrzahl von benachbarten Subbändern bestehen, und mehrere zweite Blöcke, welche jeweils aus einer Mehrzahl von benachbarten Subbändern bestehen, existieren, wobei im Frequenzbereich abwechselnd jeweils ein erster Block und ein zweiter Block folgt, wobei die Subbänder der ersten Blöcke statisch zugewiesen sind, wobei die Subbänder der zweiten Blöcke gemäß einem Frequenzsprungverfahren zugewiesen sind, und
wobei die Lage der Blöcke innerhalb des Frequenzbandes (FB) sich mit der Zeit ändert.

2. Verfahren nach Anspruch 1, bei dem die ersten Blöcke jeweils aus einer ersten Mehrzahl von benachbarten Subbändern bestehen.

3. Verfahren nach Anspruch 1 oder 2, bei dem die zweiten Blöcke jeweils aus einer zweiten Mehrzahl von benachbarten Subbändern bestehen.

4. Verfahren nach Anspruch 2 oder 3, bei dem die erste Mehrzahl gleich der zweiten Mehrzahl ist.

5. Verfahren nach Anspruch 2 oder 3, bei dem die erste Mehrzahl ungleich der zweiten Mehrzahl ist.

6. Verfahren nach einem der Ansprüche 1 bis 5, bei dem zumindest einer Funkstation (4, 5, 6) Funkressourcen aus einer Mehrzahl von zweiten Blöcken oder aus jedem der zweiten Blöcke zugewiesen sind.

7. Verfahren nach einem der Ansprüche 1 bis 6, bei dem jeder Funkstation (4, 5, 6), welcher Funkressourcen aus einem der zweiten Blöcke zugewiesen sind, Funkressourcen aus jedem der zweiten Blöcke zugewiesen sind.

8. Verfahren nach einem der Ansprüche 1 bis 7, bei dem die Subbänder der ersten Blöcke zu jedem Zeitpunkt jeweils ausschließlich einer Funkstation (1, 2, 3) zugewiesen sind.

9. Verfahren nach einem der Ansprüche 1 bis 8, bei dem einer Funkstation (1, 2, 3) gleichzeitig eine Mehrzahl von ersten Blöcken zugewiesen ist.

10. Verfahren nach einem der Ansprüche 1 bis 9, bei dem in Bezug auf mindestens einen zweiten Block verschiedene Subbänder gleichzeitig verschiedenen Funkstationen (4, 5, 6) zugewiesen sind.

11. Verfahren nach einem der Ansprüche 1 bis 10, bei dem für jeden zweiten Block das gleiche Frequenzsprungverfahren verwendet wird.

12. Verfahren nach einem der Ansprüche 1 bis 10, bei dem für mindestens zwei zweite Blöcke ein voneinander unterschiedliches Frequenzsprungverfahren verwendet wird.

13. Verfahren nach einem der Ansprüche 1 bis 12, bei dem aufgrund des Frequenzsprungverfahrens für mindestens einen zweiten Block die zugewiesenen Funkressourcen weniger sind als die vorhandenen Funkressourcen dieses Blocks.

14. Verfahren nach einem der Ansprüche 1 bis 12, bei dem aufgrund des Frequenzsprungverfahrens für mindestens einen zweiten Block die zugewiesenen Funkressourcen gleich den vorhandenen Funkressourcen dieses Blocks sind.

15. Verfahren nach einem der Ansprüche 1 bis 14, bei dem aufgrund des Frequenzsprungverfahrens zumindest einer Funkstation (4, 5, 6), welcher Funkressourcen eines zweiten Blocks zugewiesen sind, zu jedem Zeitpunkt maximal beabstandete Subbänder zugewiesen sind.

16. Verfahren nach einem der Ansprüche 1 bis 15, bei dem aufgrund des Frequenzsprungverfahrens für mindestens einen zweiten Block jedes Subband dieses zweiten Blockes einer oder mehreren Funkstationen (4, 5, 6) periodisch zugewiesen ist.

17. Verfahren nach einem der Ansprüche 1 bis 16, bei dem eine netzseitige Funkstation (BS) Informationen über die Zuweisung an Funkstationen (1, 2, 3, 4, 5, 6) sendet.

18. Netzseitige Einrichtung mit Mitteln zur Durchführung einer Zuweisung von Funkressourcen an Funkstationen (1, 2, 3, 4, 5, 6), wobei ein Frequenzband (FB) umfassend eine Vielzahl von Subbändern eingesetzt wird, wobei die Mittel zur Durchführung der Zuweisung derart ausgestaltet sind, dass mehrere erste Blöcke, welche jeweils aus einer Mehrzahl von benachbarten Subbändern bestehen, und mehrere zweite Blöcke, welche jeweils aus einer Mehrzahl von benachbarten Subbändern bestehen, existieren, wobei im Frequenzbereich abwechselnd jeweils ein erster Block und ein zweiter Block folgt, wobei die Subbänder der ersten Blöcke statisch zugewiesen sind, wobei die Subbänder der zweiten Blöcke gemäß einem Frequenzsprungverfahren zugewiesen sind, und
wobei die Lage der Blöcke innerhalb des Frequenzbandes (FB) sich mit der Zeit ändert.

## Claims

1. Method for the allocation of radio resources to radio stations (1, 2, 3, 4, 5, 6), wherein a frequency band (FB) comprising a multiplicity of sub-bands is used, the allocation takes place in such a manner that several first blocks, which in each case consist of a plurality of adjacent sub-bands, and several second blocks, which in each case consist of a plurality of adjacent sub-bands, exist, wherein in each case a first block and a second block alternately follows in the frequency domain, wherein the sub-bands of the first blocks are statically allocated, wherein the sub-bands of the second blocks are allocated in accordance with a frequency hop method, and
wherein the position of the blocks changes with time within the frequency band (FB).

**2.** Method according to Claim 1, wherein the first blocks in each case consist of a first plurality of adjacent sub-bands.

**3.** Method according to Claim 1 or 2, wherein the second blocks in each case consist of a second plurality of adjacent sub-bands.

**4.** Method according to Claim 2 or 3, wherein the first plurality is equal to the second plurality.

**5.** Method according to Claim 2 or 3, wherein the first plurality is not equal to the second plurality.

**6.** Method according to one of Claims 1 to 5, wherein radio resources are allocated to at least one radio station (4, 5, 6) from a plurality of second blocks or from each of the second blocks.

**7.** Method according to one of Claims 1 to 6, wherein radio resources are allocated from each of the second blocks to each radio station (4, 5, 6) to which radio resources are allocated from one of the second blocks.

**8.** Method according to one of Claims 1 to 7, wherein the sub-bands of the first blocks are in each case allocated to exclusively one radio station (1, 2, 3) at each point in time.

**9.** Method according to one of Claims 1 to 8, wherein a plurality of first blocks is simultaneously allocated to one radio station (1, 2, 3).

**10.** Method according to one of Claims 1 to 9, wherein different sub-bands are simultaneously allocated to different radio stations (4, 5, 6) with respect to at least one second block.

**11.** Method according to one of Claims 1 to 10, wherein the same frequency hop method is used for each second block.

**12.** Method according to one of Claims 1 to 10, wherein a frequency hop method mutually different is used for at least two second blocks.

**13.** Method according to one of Claims 1 to 12, wherein, due to the frequency hop method, the allocated radio resources are less for at least one second block than the existing radio resources of this block.

**14.** Method according to one of Claims 1 to 12, wherein, due to the frequency hop method, the allocated radio resources are equal for at least one second block to the existing radio resources of this block.

**15.** Method according to one of Claims 1 to 14, wherein, due to the frequency hop method, maximally spaced-apart sub-bands are allocated at each point in time to at least one radio station (4, 5, 6) to which radio resources of a second block are allocated.

**16.** Method according to one of Claims 1 to 15, wherein, due to the frequency hop method, for at least one second block, each sub-band of this second block is periodically allocated to one or more radio stations (4, 5, 6).

**17.** Method according to one of Claims 1 to 16, wherein a radio station (BS) in the network sends information about the allocation to radio stations (1, 2, 3, 4, 5, 6).

**18.** Device in the network with means for carrying out an allocation of radio resources to radio stations (1, 2, 3, 4, 5, 6), wherein a frequency band (FB) comprising a multiplicity of sub-bands is used, wherein the means for carrying out the allocation are arranged in such a manner that several first blocks, which in each case consist of a plurality of adjacent sub-bands, and several second blocks, which in each case consist of a plurality of adjacent sub-bands, exist, wherein in each case a first block and a second block alternately follows in the frequency domain, wherein the sub-bands of the first blocks are statically allocated, wherein the sub-bands of the second blocks are allocated in accordance with a frequency hop method, and
wherein the position of the blocks changes with time within the frequency band (FB).

## Revendications

1. Procédé pour l'allocation de ressources radio à des stations radio (1, 2, 3, 4, 5, 6), dans lequel une bande de fréquences (FB) comprenant une pluralité de sous-bandes est utilisée, laquelle allocation s'effectue de telle sorte que plusieurs premiers blocs, qui comprennent chacunsont respectivement constitués d'une pluralité de sous-bandes voisines, et plusieurs seconds blocs, qui comprennent chacunsont respectivement constitués d'une pluralité de sous-bandes voisines, existent, à chaque fois un premier bloc et un second bloc suivant en alternativement alternance dans la plagele domaine de fréquences, les sous-bandes des premiers blocs étant allouées de façon statique, les sous-bandes des seconds blocs étant allouées selon un procédé à saut de fréquence et,
la position des blocs à l'intérieur de la bande de fréquences (FB) variant avec le temps.

2. Procédé selon la revendication 1, dans lequel les premiers blocs comprennent chacunsont respectivement constitués d'une première pluralité de sous-bandes voisines.

3. Procédé selon la revendication 1 ou 2, dans lequel les seconds blocs respectivement constitués d' comprennent chacun une seconde pluralité de sous-bandes voisines.

4. Procédé selon la revendication 2 ou 3, dans lequel la première pluralité est égale à la seconde pluralité.

5. Procédé selon la revendication 2 ou 3, dans lequel la première pluralité est différente de la seconde pluralité.

6. Procédé selon l'une quelconque des revendications 1 à 5, dans lequel des ressources radio constituées d'une pluralité de seconds blocs ou de chacun des seconds blocs sont allouées à au moins une station radio (4, 5, 6).

7. Procédé selon l'une quelconque des revendications 1 à 6, dans lequel des ressources radio constituées de chacun des seconds blocs sont allouées à chaque station radio (4, 5, 6), à laquelle sont allouées des ressources radio constituées de chacun d'un des seconds blocs.

8. Procédé selon l'une quelconque des revendications 1 à 7, dans lequel les sous-bandes des premiers blocs sont respectivement allouées à tout moment chacune uniquement à une station radio (1, 2, 3).

9. Procédé selon l'une quelconque des revendications 1 à 8, dans lequel en même temps une pluralité de premiers blocs est allouée à une station radio (1, 2, 3).

10. Procédé selon l'une quelconque des revendications 1 à 9, dans lequel différentes sous-bandes par rapport à au moins un second bloc sont allouées en même temps à différentes stations radio (4, 5, 6). par rapport à au moins un second bloc.

11. Procédé selon l'une quelconque des revendications 1 à 10, dans lequel le même procédé à saut de fréquence est utilisé pour chaque second bloc.

12. Procédé selon l'une quelconque des revendications 1 à 10, dans lequel un procédé à saut de fréquence différent des autres procédés l'un de l'autre est utilisé pour au moins deux seconds blocs.

13. Procédé selon l'une quelconque des revendications 1 à 12, dans lequel, sur la base du procédé à saut de fréquence et pour au moins un second bloc, les ressources radio allouées sont inférieures aux ressources radio présentes ressources radio de ce bloc.

14. Procédé selon l'une quelconque des revendications 1 à 12, dans lequel, sur la base du procédé à saut de fréquence et pour au moins un second bloc, les ressources radio allouées sont égales aux ressources radio présentes ressources radio de ce bloc.

15. Procédé selon l'une quelconque des revendications 1 à 14, dans lequel, sur la base du procédé à saut de fréquence, des sous-bandes espacées de façon maximale sont allouées à tout moment à au moins une station radio (4, 5, 6), à laquelle sont attribuées des ressources radio d'un second bloc.

16. Procédé selon l'une quelconque des revendications 1 à 15, dans lequel, sur la base du procédé à saut de fréquence et pour au moins un second bloc, chaque sous-bande de ce second bloc est allouée périodiquement à une ou plusieurs stations radio (4, 5,6).

17. Procédé selon l'une quelconque des revendications 1 à 16, dans lequel une station radio (BS) côté réseau envoie des informations sur l'allocation à des stations radio (1, 2, 3, 4, 5, 6).

18. Dispositif côté réseau comprenant des moyens pour la réalisation d'une allocation de ressources radio à des stations radio (1, 2, 3, 4, 5, 6), une bande de fréquences (FB) comprenant une pluralité de sous-bandes étant utilisée, les moyens pour la réalisation de l'allocation étant conçus de telle sorte que plusieurs premiers blocs, qui sont respectivement constitués chacun d'une pluralité de sous-bandes voisines, et plusieurs seconds blocs, qui sont respectivement constitués chacun d'une pluralité de sous-bandes voisines, existent, à chaque fois un premier bloc et un second bloc suivant en alternance dans la le domainebande de fréquences, les sous-bandes des premiers blocs étant allouées de façon statique, les sous-bandes des seconds blocs étant allouées selon un procédé à saut de fréquence, et la position des blocs à l'intérieur de la bande de fréquences (FB) variant avec le temps.

FIG 1

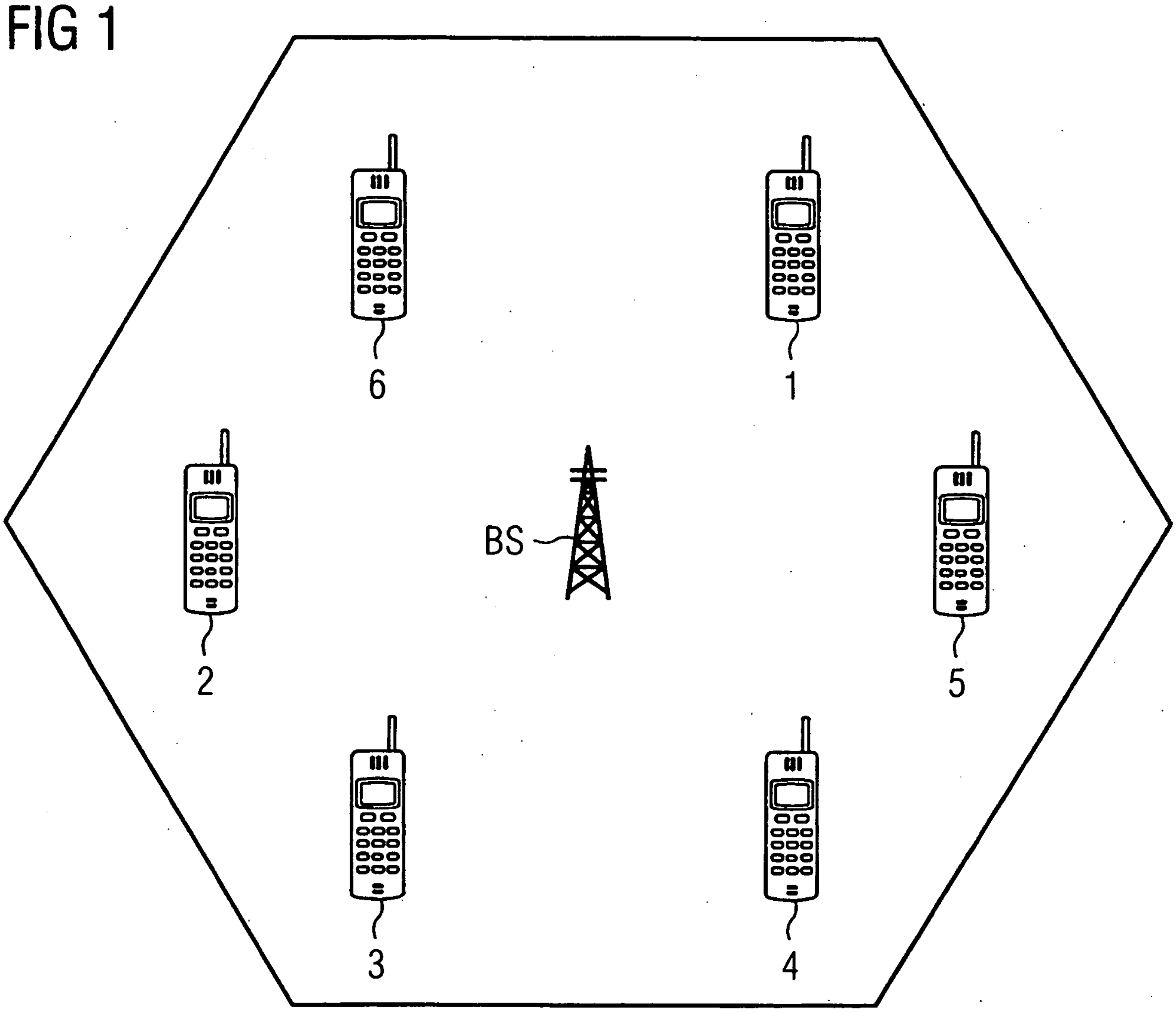

FIG 2

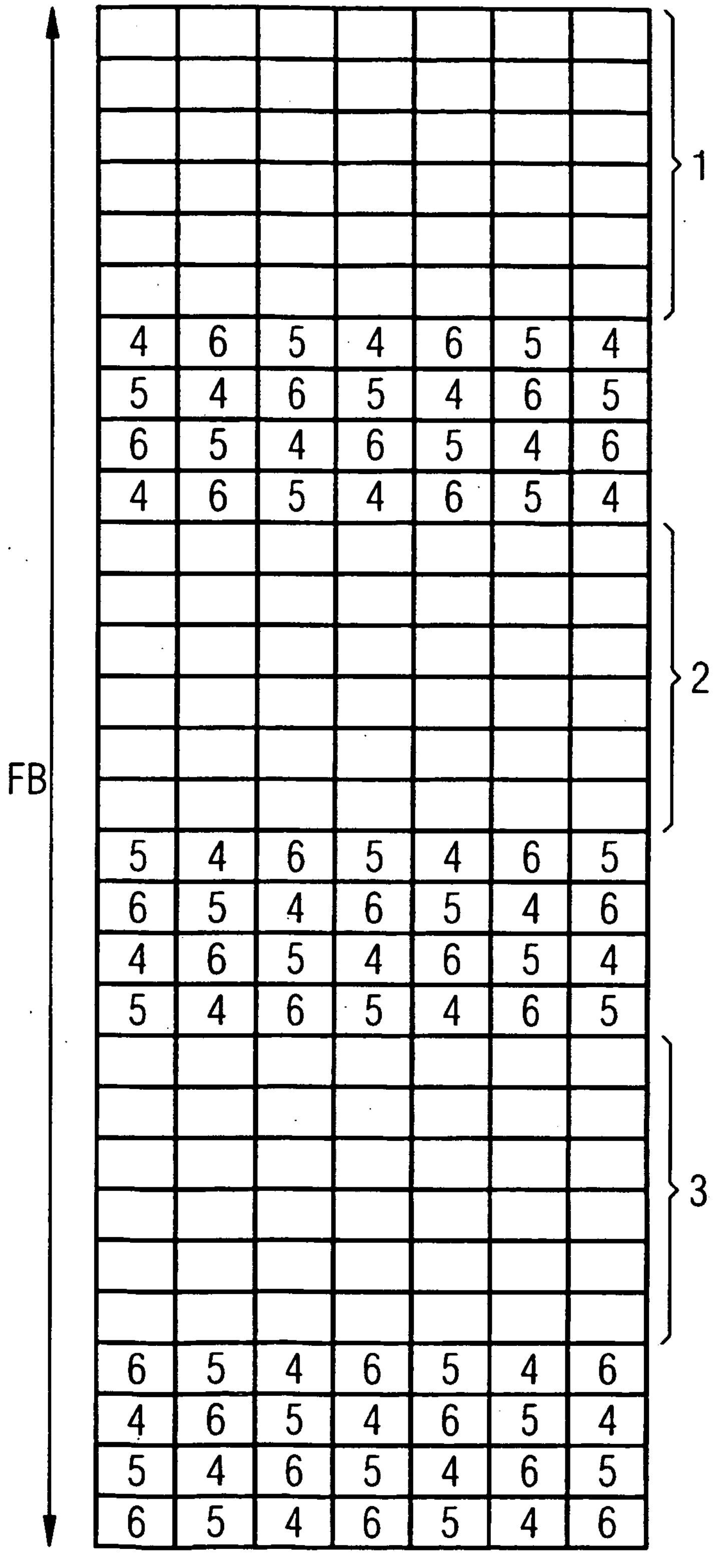
1
4 6 5 4 6 5 4
5 4 6 5 4 6 5
6 5 4 6 5 4 6
4 6 5 4 6 5 4
2
FB
5 4 6 5 4 6 5
6 5 4 6 5 4 6
4 6 5 4 6 5 4
5 4 6 5 4 6 5
3
6 5 4 6 5 4 6
4 6 5 4 6 5 4
5 4 6 5 4 6 5
6 5 4 6 5 4 6

FIG 3

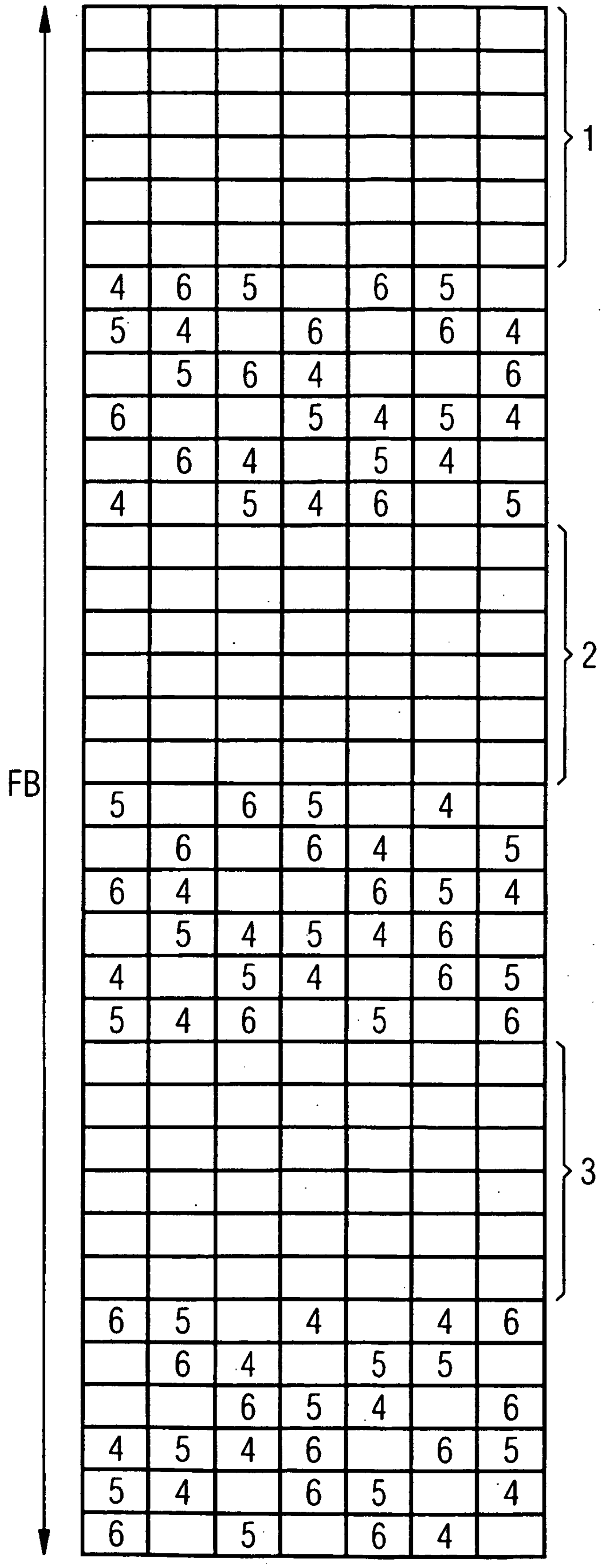

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 20051096538 A1


### In der Beschreibung aufgeführte Nicht-Patentliteratur


- **A FILIPPI ; E. COSTA ; E. SCHULZ.** Low Complexity Interleaved Sub-carrier Allocation in OFDM Multiple Access Systems. *Proc. IEEE VTC'04,* September 2004
- **T. FRANK ; A. KLEIN ; E. COSTA ; E. SCHULZ.** Interleaved Orthogonal Frequency Division Multiple Access with Variable Data Rates. *OFDM Workshop, Hamburg,* 31. August 2005